Europäisches Patentamt

(19) European Patent Office

Office européen des brevets

(11) EP 0 674 845 B1

(12) EUROPEAN PATENT SPECIFICATION

(45) Date of publication and mention
of the grant of the patent:
16.06.1999 Bulletin 1999/24

(51) Int. Cl.$^6$: **A23L 3/3409**, A23L 3/015,
A23L 3/16, A23L 3/3535

(21) Application number: 94104851.4

(22) Date of filing: 28.03.1994

(54) **Method for deactivating enzymes and microorganisms**

Verfahren zur Desaktivierung von Enzymen und Mikroorganismen

Procédé pour désactiver les enzymes et les microorganismes

(84) Designated Contracting States:
**AT BE CH DE DK ES FR GB IE IT LI NL SE**

(43) Date of publication of application:
**04.10.1995 Bulletin 1995/40**

(73) Proprietor:
**SOCIETE DES PRODUITS NESTLE S.A.
1800 Vevey (CH)**

(72) Inventor: **Kalina, Vladimir
CH-1012 Lausanne (CH)**

(74) Representative: **Micheli & Cie
Rue de Genève 122,
Case Postale 61
1226 Genève-Thonex (CH)**

(56) References cited:
**WO-A-87/05782          WO-A-90/02799
CA-A- 1 217 965          DE-A- 3 734 025
FR-A- 2 650 942**

## Description

The present invention relates to a method for deactivating enzymes and microorganisms, which is more particularly applicable in food processing.

The successful application of technical enzymes in food processing generally requires a special deactivitation step not only to stop the reaction at a desired stage, but also to assure minimal or undetectable residual enzyme levels in the final product. This is a fundamental condition in order to assure good product quality and stability (shelf-life). As far as shelf-life is concerned, the same condition also applies to endogenous enzymes in numerous food products and raw-materials where residual enzyme activites (e.g. lipases and oxidative enzymes) can cause serious problems in the course of processing and storage.

Enzyme deactivation is normally effected by thermal treatment at appropriate temperature and pH. However, the processing which is required to completely eliminate enzyme activity may have a negative effect on important product characteristics (e.g. colour, flavour, consistency and nutritional value). Therefore, there is a general interest in the development of new techniques leading to enhanced enzyme deactivation at lower temperatures.

The development of such techniques is particularly important, since they should also be applicable to vital protein denaturation in living microorganisms where they could increase death rates during thermal treatment (i.e. in connection with sterilization of food products), or more particularly to the deactivation of microbial spores of major food contaminants (bacteria, yeasts, moulds, etc.).

Denaturation and loss of the biological activity of proteins is obtained by heating. The effect is found enhanced especially by the action of acids, alkali, organic solvents, detergents and high concentrations of urea or guanidine (i.e. wherever electric charge, water activity or hydrogen bonding are negatively affected in relation to the optimum condition for maximum enzyme stability). However, apart from sligh pH adjustments with acid or alkali, the mentioned reagents are not applicable in the processing of food.

The application of high hydrostatic pressures above 1000 bar is a special condition which has been reported in the preservation and sterilization of milk as far back as 1899. The effet of high pressures up to 10000 bar under varying temperature in the range -25°C to 100°C has been studied extensively by Timson and Short in "Resistance of Microorganisms to Hydrostatic Pressure", Biotechnol Bioeng. 7, 139-159 (1965). These authors suggest that pressure increases the solvation of ions and thus increases the ionization of weak electrolytes. Above 2000 bar ionization and the formation of ionic bonds between charged groups on proteins alters their solubility causing precipitation and irreversible denaturation (deactivation of enzymes). It is interesting to note that, in the case of spores, very low levels of surviving microorganisms are insensitive to the duration of pressurization, and that temperature appears to be relatively unimportant above 2000 bar. Pressure opposes reactions whose end products occupy more space, and it appears that above 1000 bar the pressure counteracts the denaturation of proteins by heat. Timson and Short conclude that the mechanisms whereby pressure denatures proteins are different from those involved in heat denaturation.

Furthermore, FR-A-2.650.942 discloses a process for inactivating enzymes in foods by heating under pressure of $CO_2$ and/or $N_2O$, which allows to reduce the temperature and the duration of the treatment.

A first aim of the present invention is thus to improve this process in order to still obtain a more efficient inactivation together with a lower temperature and a shorter duration of the treatment.

On a purely theoretical basis it is supposed that as an enzyme becomes destabilized at critical temperatures, carbon dioxide will have the tendency to penetrate at loosened sites of hydrogen bonding. As temperature and pressure are increased, further opening of the protein molecule will ensue and the conformational change may result in loss of enzymatic activity. However, such a mechanism is very likely to be reversible so that enzyme activity will reappear when $CO_2$ pressure is released.

It is therefore a further purpose of the present invention to overcome the problem of the mechanism reversibility, and to provide a method which leads to a complete and irreversible deactivation of the enzymes or microorganisms.

The present inventors have now unexpectedly found that, if the combined heating / $CO_2$ or $N_2O$ pressure treatment of the above French document is carried out in presence of a sulfured reducing agent such sa $SO_2$, cystein, glutathione, etc., the reactive groups, especially -SH, but also -S-S-, -OH, -NH$_2$, etc. of the protein molecules, which are exposed further to the opening-up action of the temperature and the $CO_2$ or $N_2O$ pressure, will react with said reducing agent in an irreversible manner.

Consequently, the object of the present invention, which is intended to reach the above-mentioned purposes, is consisting in a method as claimed in claim 1 for deactivating enzymes or microorganisms especially in food products which comprises the heat treatment of the enzymes or microorganisms in aqueous media under $CO_2$ or $N_2O$ pressure and in presence of a reducing agent selected from the active sulfured compounds.

It is to be first specified that the aqueous media means that a water content of at least 10% should be present, and the microorganisms to be inactivated are both in the vegetative and sporulated forms.

As active sulfured compounds, one can use for example a sulfite, preferably added in the form of $SO_2$ gas, in an equivalent of about 10 to 1000 ppm $SO_2$, preferably 30 to 100 ppm. Gaseous $SO_2$ can also be obtained in the appropriate amount from a diluted aqueous solution of sodium hydrogen sulphite ($NaHSO_3$) under the effect of the $CO_2$ pressure. Active thiol compounds can also be used advantageously, such as glutathione, cystein or thiamine in the reduced form and at concentrations within about 0,05 to 0,5%.

Of course, the reducing agent shall preferably be selected among those which are authorized for being used in food industry.

The treatment temperature is corresponding to usual food processing temperatures, i.e. 50°C to 120°C. As to the carbon dioxide or nitrogen monoxide pressure, it can be choosen in a range within 5 to 1000 bar, preferably between 50 and 500 bar, so as to obtain for example a $CO_2$ concentration of at least 5 g/l, but preferably 20 g/l or more.

The product to be treated by the method according to the present invention can be in the form of a liquid or paste; in this case, the gaseous sulfured compound, for example $SO_2$, can be injected directly into the liquid or a paste under agitation. If the product is in a solid form, for example a solid food product such potatoes, spices, or even a cooked plate, then one can advantageously apply the method mentioned before in which the action of $CO_2$ pressure and $SO_2$ (for example from a solution of sodium hydrogen sulfite) is exerted from outside on the product, without any form of agitation.

The present invention will now be illustrated by the following Examples, which refer to the annexed drawings.

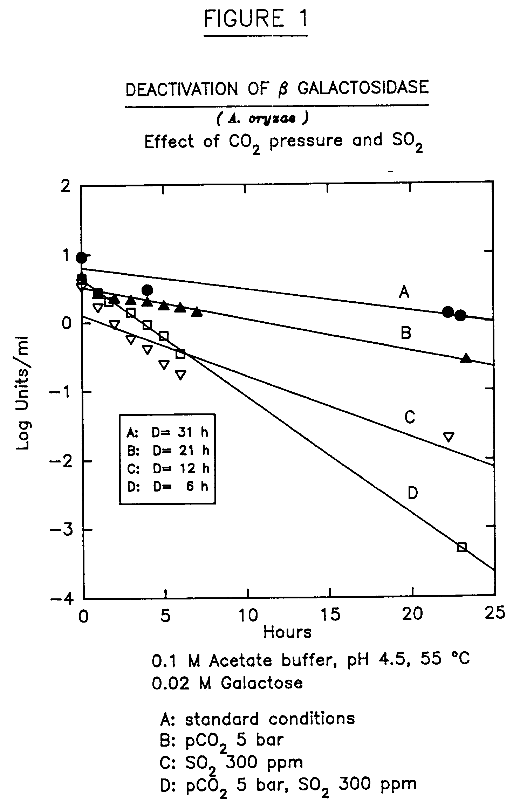

Figures 1 to 4 represent graphics reporting the results of the Examples, and more particularly the effect of $CO_2$ and $SO_2$, respectively glutathione, on the deactivation of two different enzymes (galactosidase and lipase) and of microbial spores (B. subtilis); the value D is the enzyme decimal deactivation time which corresponds to the time required to obtain a decrease in enzyme activity by a factor of 10 according to the expression :

$$D = t/(\log[E]o - \log[E]t)$$

where $[E]o$ is the initial enzyme concentration and $[E]t$ the enzyme concentration after time t.

Example 1 :

1.5 L of buffer solution (0.1 M. sodium acetate, 0.02 M. galactose, pH 4,5) was thermostated under agitation at 55°C in a 2 L glass autoclave (Büchi, max. pressure 12 bar).

A solution of lactase (β-galactosidase) from A. oryzae was injected into the system by a pressure pump to obtain a final enzyme concentration of approximately 5 U/ml. Samples of the reaction medium were withdrawn at regular intervals and analysed for lactase activity.

The above operation was repeated, but the buffer solution was first saturated with carbon dioxide at a pressure of 5 bar. The whole sequence was again repeated, but sodium sulphite was first added to the buffer solution to obtain the equivalent concentration of 300 ppm $SO_2$. The results shown in Figure 1 demonstrate the enhancement of the deactivation of lactase when $CO_2$ is combined with $SO_2$.

Residual lactase activity in processed samples was determined by incubation with p-nitrophenyl-beta-D-galactopyranoside at 30°C during 30 min. and colorimetric assay at 410nm.

Example 2 :

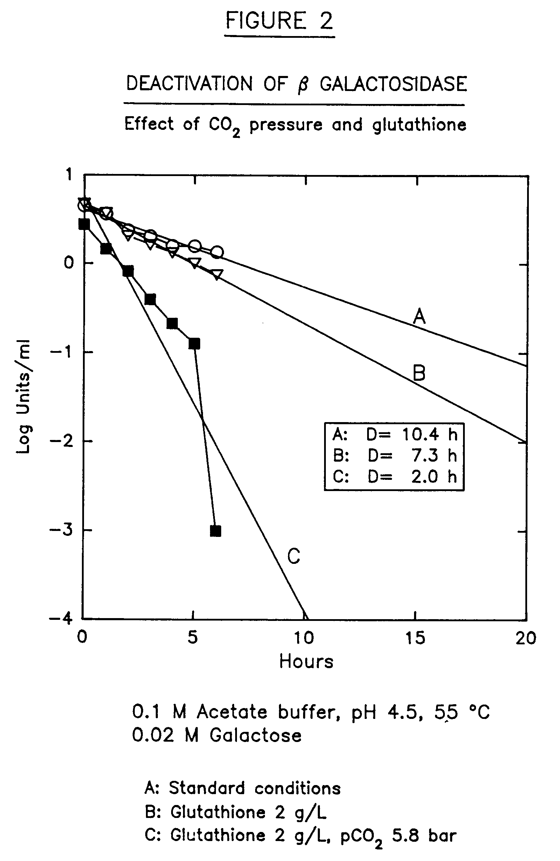

The operation described in Example 1 was repeated using glutathione (reduced form, 2 g/L) instead of sulfite. Carbon dioxide saturation was effected at 5.8 bar. The results reported on Figure 2 also clearly demonstrate the enhancement of the deactivation of lactase when $CO_2$ pressure is combined with a thiol active compound.

Example 3 :

1.5 L of butter solution 0.08M sodium citrate (pH 6,5) and containing 24 mg/L of oleic acid was thermostated at 55°C in a 2 L glass autoclave as in Example 1. A solution of lipase (M10 Amano) was injected into the system by a pressure pump to obtain a final enzyme concentration of approximately 0.5 U/ml. Samples of the reaction medium were withdrawn at regular intervals and analysed for lipase activity.

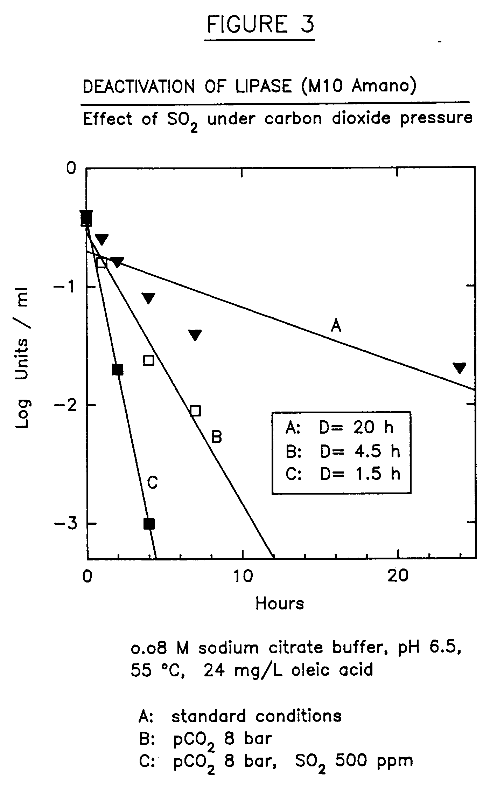

The above operation was repeated, but the buffer solution was saturated with carbon dioxide at a pressure of 8 bar. This last operation was again repeated, but sodium sulfite was first added to the buffer solution to obtain the equivalent concentration of 500 ppm $SO_2$. The results presented on Figure 3 again demonstrate the enhancement of the deactivation of lipase when $CO_2$ pressure is combined with $SO_2$.

Residual lipase activity was determined by incubation of the reaction mixture with olive oil at 37°C. The free fatty acids were analysed by a modification of the colorimetric copper soap method described by Koops and Klomp in Neth. Milk Dairy J. 31:56-74 (1977).

Example 4 :

3.5 L of sterile demineralized water was inoculated with 0,5 L of a suspension of B. subtilis spores (isolated as a thermoresistant contaminant of food) to obtain a CFU count of approximately $1 \times 10^6$/ml, and rapidly thermostated under agitation to a temperature of 100°C in a 5 L stainless steel autoclave (Brignole-Nova, max. pressure 300 bar). Samples were withdrawn under pressure at regular intervals. The viable cell count was determined by standard plate assay.

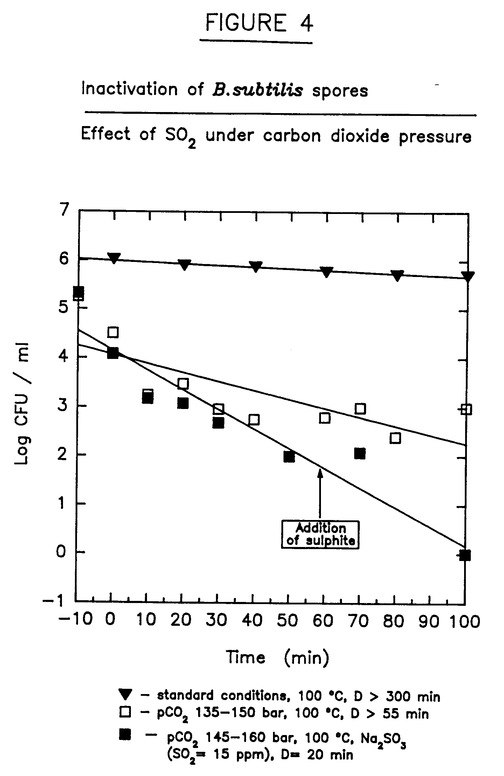

The above operation was repeated but the microbial spore suspension was pressurized to 150 bar with carbon dioxide from a gas bottle by means of a membrane compressor. Samples were withdrawn through a pressure seal at regular intervals. After 60 minutes, 60 ml of sulphite was injected into the system to obtain the equivalent concentration of 15 ppm $SO_2$. The results presented on Figure 4 also demonstrate the enhancement of the inactivation rate of microbial spores under the effect of $SO_2$.

The residual microbial count expressed in colony forming units (CFU per ml) after pressure processing was determined both directly in untreated samples and in samples treated for 10 min at 80°C. The assy was carried out by spreading 0.1 ml of serial dilutions of the samples in sterile saline solution on nutrient agar and incubating for more than three days at 37°C. The decimal inactivation time D was determined using the expression $D = t/(\log[CFU]o - \log[CFU]t)$, whhere [CFU]o and [CFU]t are the microbial spore counts (not inactivated at 80°C) at zero time and time t respectively.

Example 5

Raw whole potatoes held in a nylon net were suspended inside the autoclave described in Example 4. The autoclave was pressurized with carbon dioxide at a rate of 3.2 bar/min. to a final pressure of 165 bar and simultaneously heat was applied at a rate of 0.75°C/min to attain 55°C in the vessel. The potato sample was held at 165 bar and 55-60°C for a period of 20 minutes. Depressurization and cooling to 10°C was effected over a period of 40 minutes at a rate of -4 bar/min. Exudate from a sample of the sliced pressure processed potatoes was subject to progressive browning after standing indicating the presence of residual polyphenol oxidase.

When the same processing conditions are applied in the presence of a diluted solution of sodium hydrogen sulphite (in water) placed at the bottom of the autoclave vessel, the product is found stabilized against the browning reaction while the natural character of the raw potato is preserved. The penetration effect of the combined use of sulphur dioxide and supercritical carbon dioxide is here demonstrated in the case of a typical "solid food product" by the complete deactivation of polyphenol oxidase.

Claims

1. Method for deactivating enzymes or microorganisms especially in food products, which comprises the heat treatment at 50 to 120°C of said enzymes or microorganisms in an aqueous medium under a carbon dioxide or nitrogen monoxide pressure in the range of 5 to 1000 bar, and in presence of a reducing agent selected from the active sulfured compounds.

2. Method according to claim 1, in which the reducing agent is a sulfite.

3. Method according to claim 2, in which the sulfite is $SO_2$ liquid or gas in an equivalent of 10 to 1000 ppm $SO_2$, preferably 30 to 500 ppm.

4. Method according to claim 3, in which the gaseous $SO_2$ is liberated from a diluted aqueous solution of sodium hydrogen sulfite.

5. Method according to claim 1, in which the reducing agent is an active thiol compound.

6. Method according to claim 5, in which the thiol compound is glutathione or cystein or thiamine in the reduced form and at concentrations within 0.05 to 0.5%.

7. Method according to one of claims 1 to 6, in which the $CO_2$ or $N_2O$ pressure is in the range of 50 to 500 bar, so that the $CO_2$ or $N_2O$ concentration is of at least 5 g/l, and preferably about 20 g/l.

8. Method according to one of claims 1 to 7 for treating products in the liquid or pasty form, in which the active sulfured compound is injected as a gas directly into said liquid or paste under agitation.

9. Method according to one of claim 1 to 7 for treating solid food products, in which the action of $CO_2$ or $N_2O$ pressure and of the gaseous sulfured compound is exerted from outside without agitation.

Patentansprüche

1. Verfahren zur Desaktivierung von Enzymen und Mikroorganismen insbesondere in Nahrungsmittelerzeugnissen, das die Hitzebehandlung der benannten Enzyme oder Mikroorganismen bei 50 bis 120 °C in einem wässrigen Medium unter einem Kohlendioxid- oder Distickstoffoxiddruck im Bereich von 5 bis 1000 bar und in Gegenwart eines unter aktiven, schwefelhaltigen Verbindungen ausgewählten Reduktionsmittels umfasst.

2. Verfahren gemäss Anspruch 1, worin das Reduktionsmittel ein Sulfit ist.

3. Verfahren gemäss Anspruch 2, worin das Sulfit flüssiges oder gasförmiges $SO_2$ in einer Entsprechung von 10 bis 1000 ppm $SO_2$, bevorzugt 30 bis 500 ppm ist.

**4.** Verfahren gemäss Anspruch 3, worin das gasförmige $SO_2$ aus einer verdünnten wässrigen Lösung von Natriumhydrogensulfit freigesetzt wird.

**5.** Verfahren gemäss Anspruch 1, worin das Reduktionsmittel eine aktive Thiolverbindung ist.

**6.** Verfahren gemäss Anspruch 5, worin die Thiolverbindung Glutathion oder Cystein oder Thiamin in der reduzierten Form in Konzentrationen in Bereich von 0,05 bis 0,5 % ist.

**7.** Verfahren gemäss einem der Ansprüche 1 bis 6, worin der $CO_2$- oder $N_2O$-Druck im Bereich von 50 bis 500 bar liegt, so dass die $CO_2$- oder $N_2O$-Konzentration wenigstens 5 g/l, vorzugsweise etwa 20 g/l beträgt.

**8.** Verfahren gemäss einem der Ansprüche 1 bis 7 zur Behandlung von Erzeugnissen in flüssiger oder pastöser Form, worin die aktive, schwefelhaltige Verbindung als ein Gas unter Rühren direkt in die benannte Flüssigkeit oder Paste eingespritzt wird.

**9.** Verfahren gemäss einem der Ansprüche 1 bis 7 zur Behandlung fester Nahrungsmittelerzeugnisse, worin die Wirkung des $CO_2$- oder $N_2O$-Druckes und der gasförmigen schwefelhaltigen Verbindung von aussen her ohne Rühren ausgeübt wird.

**Revendications**

**1.** Méthode pour la désactivation d'enzymes ou de micro-organismes plus particulièrement dans des produits alimentaires, qui comprend le traitement thermique à 50-120°C desdits enzymes ou micro-organismes en milieu aqueux sous une pression de dioxyde de carbone ou de monoxyde d'azote comprise entre 5 et 1000 bars, et en présence d'un agent de réduction choisi parmi les composés soufrés actifs.

**2.** Méthode selon la revendication 1, dans laquelle l'agent de réduction est un sulfite.

**3.** Méthode selon la revendication 2, dans laquelle le sulfite est du $SO_2$ liquide ou gazeux en un équivalent de 10 à 1000 ppm $SO_2$, de préférence de 30 à 500 ppm.

**4.** Méthode selon la revendication 3, dans laquelle le $SO_2$ gazeux est libéré à partir d'une solution aqueuse diluée d'hydrogénosulfite de sodium.

**5.** Méthode selon la revendication 1, dans laquelle l'agent de réduction est un composé thiol actif.

**6.** Méthode selon la revendication 5, dans laquelle le composé thiol est le glutathion, la cystéine ou la thiamine sous forme réduite et à des concentrations comprises entre 0,05 et 0,5%.

**7.** Méthode selon l'une des revendications 1 à 6, dans laquelle la pression de $CO_2$ ou de $N_2O$ est comprise entre 50 et 500 bars, de telle sorte que la concentration en $CO_2$ ou en $N_2O$ soit d'au moins 5 g/l, et de préférence d'environ 20 g/l.

**8.** Méthode selon l'une des revendications 1 à 7 pour le traitement de produits sous forme liquide ou pâteuse, dans laquelle le composé soufré actif est injecté sous forme d'un gaz directement dans ledit liquide ou ladite pâte et sous agitation.

**9.** Méthode selon l'une des revendications 1 à 7 pour le traitement de produits alimentaires solides dans laquelle l'action de la pression de $CO_2$ ou de $N_2O$ et d'un composé soufré gazeux s'exerce depuis l'extérieur sans agitation.

# FIGURE 1

## DEACTIVATION OF $\beta$ GALACTOSIDASE
### ( A. oryzae )
Effect of $CO_2$ pressure and $SO_2$

0.1 M Acetate buffer, pH 4.5, 55 °C
0.02 M Galactose

A: standard conditions
B: $pCO_2$ 5 bar
C: $SO_2$ 300 ppm
D: $pCO_2$ 5 bar, $SO_2$ 300 ppm

FIGURE 2

DEACTIVATION OF β GALACTOSIDASE

Effect of $CO_2$ pressure and glutathione

A: D= 10.4 h
B: D= 7.3 h
C: D= 2.0 h

0.1 M Acetate buffer, pH 4.5, 55 °C
0.02 M Galactose

A: Standard conditions
B: Glutathione 2 g/L
C: Glutathione 2 g/L, $pCO_2$ 5.8 bar

7

# FIGURE 3

## DEACTIVATION OF LIPASE (M10 Amano)

### Effect of $SO_2$ under carbon dioxide pressure

A: D= 20 h
B: D= 4.5 h
C: D= 1.5 h

o.o8 M sodium citrate buffer, pH 6.5,
55 °C, 24 mg/L oleic acid

A: standard conditions
B: $pCO_2$ 8 bar
C: $pCO_2$ 8 bar, $SO_2$ 500 ppm

## FIGURE 4

Inactivation of *B.subtilis* spores

Effect of $SO_2$ under carbon dioxide pressure

▼ — standard conditions, 100 °C, D > 300 min
□ — pCO₂ 135-150 bar, 100 °C, D > 55 min
■ — pCO₂ 145-160 bar, 100 °C, Na₂SO₃
      (SO₂ = 15 ppm), D= 20 min